# FASCICULE DE BREVET EUROPEEN

(11) **EP 1 527 706 B1**
(45) Date de publication et mention de la délivrance du brevet: **18.07.2007**
(21) Numéro de dépôt: 04025598.6
(22) Date de dépôt: 28.10.2004
(51) Int. Cl.: A43B 5/04, B29D 31/518, B29D 31/50

(54) **Procédé de décoration et de renfort d'une coque de chaussure de sport**
Verfahren zum Dekorieren und Verstärken von einer Schale eines Sportschuhs
Process for decoration and stiffening of a shell of a sport shoe

(30) Priorité: 31.10.2003 FR 0312764
(43) Date de publication de la demande: 04.05.2005
(73) Titulaire: Salomon S.A., 74370 Metz-Tessy (FR)
(72) Inventeur: Chaigne, Jérome, 74540 Gruffy (FR); Bollard, Patrick, 74290 Veyrier du Lac (FR)

(56) Documents cités:
- EP-A- 0 722 843
- FR-A- 1 564 481
- FR-A- 2 405 812
- FR-A- 2 847 433
- US-A- 5 647 150

## Description

La présente invention concerne la fabrication des chaussures dans lesquelles une partie des éléments sont réalisés par injection-moulage d'une matière thermoplastique. Ceci est notamment le cas pour les chaussures de ski, de patinage, de snowboard. Plus particulièrement l'invention concerne un procédé de décoration et de renfort des éléments de chaussure réalisés par injection-moulage.

Il est courant de décorer les éléments de chaussure par application d'encre sur la pièce une fois la chaussure finie ou semi-finie. Il est également connu de coller le motif décoratif voulu sur les faces extérieures des éléments de chaussure.

Ces procédés aboutissent à une décoration superficielle qui est particulièrement vulnérable aux agressions mécaniques et chimiques extérieures. Dans le cas d'une chaussure de ski, les coups de carre sur la surface de la coque sont fréquents et ils entraînent une dégradation rapide et irrémédiable de la décoration. De façon générale et indépendamment des décorations qui y sont appliquées, les matériaux plastiques injectables utilisés pour la fabrication des chaussures de ski sont facilement endommagés par tout contact qui se produit entre la coque et les carres de ski.

Un autre problème des chaussures de ski actuelles vient du fait que en certains endroits de la coque, le matériau a tendance à fluer au cours du temps. Le fluage se produit lorsque les matériaux qui composent la coque sont soumis à des contraintes d'étirement pendant un certain temps. Le fluage peut, au moins partiellement, allonger la coque et modifier les propriétés mécaniques de celle-ci. C'est notamment le cas lorsque la coque est réalisée en PU (polyuréthanne) et aux endroits où on utilise une épaisseur moindre de matière pour faciliter la flexion de la coque. Par exemple, les overlaps du collier sont souples pour permettre l'enveloppement du bas de jambe et sont soumis aux efforts de traction des dispositifs de serrage.

Un autre inconvénient des matériaux utilisés pour l'injection des chaussures de ski est qu'ils sont sensibles à la température. Ainsi dans des conditions de températures très basses, la chaussure est très rigide et elle peut se révéler presque impossible à enfiler et à enlever. Sous des températures plus chaudes, la chaussure sera plus souple et son comportement mécanique différent.

Le document FR 1564481 décrit un procédé servant de base aux revendications 1, 8 et 9.

L'objectif de l'invention est de pallier aux inconvénients précités et en particulier de fournir un nouveau procédé de décoration des composants d'une chaussure de sport réalisée par injection qui assure une décoration résistante aux agressions mécaniques et chimiques.

L'objectif de l'invention est également de fournir une chaussure dont les composants obtenus par injection sont renforcés par la présence d'un insert de décoration et de renfort. L'objectif étant notamment d'empêcher le fluage du matériau thermoplastique injecté.

L'objectif de l'invention est atteint par la fabrication d'un composant d'une chaussure de sport selon le procédé qui comprend les étapes suivantes :
- préparer un insert par complexage de trois couches, une première couche constituée d'un film fait d'une première matière thermoplastique, une deuxième couche faite d'un assemblage de fibres et d'une troisième couche faite d'un film de colle,
- ouvrir le moule, ledit moule comportant une matrice et un noyau,
- placer dans ledit moule et à proximité d'une des parois du moule un insert de telle façon que le film thermoplastique soit placé entre le film de colle et ladite une des parois du moule,
- refermer ledit moule,
- injecter une deuxième matière thermoplastique dans ledit moule de façon que la matière thermoplastique recouvre au moins partiellement ledit insert,
- ouvrir à nouveau ledit moule et extraire la partie de la chaussure de sport ainsi fabriquée.

Avantageusement, la première matière thermoplastique a une température de plastification plus élevée que la deuxième matière thermoplastique et la température d'injection est choisie de telle façon que la première couche de l'insert ne change pas de phase lors de l'injection de la deuxième matière thermoplastique.

Dans un premier mode de réalisation de l'invention, ladite deuxième couche se trouve entre lesdites première et troisième couches. La couche de décoration est placée entre le film thermoplastique et le film de colle.

Dans un autre mode de réalisation de l'invention, c'est la troisième couche qui se trouve entre lesdites première et deuxième couches. C'est alors le film de colle qui est placé entre la couche de décoration et le film thermoplastique.

De préférence la couche de décoration est une couche réalisée par assemblage de fibres. Il peut s'agir de fibres textile ou non, lesquelles sont assemblées par tissage, tricotage, superposage ou tout autre moyen.

L'objectif de l'invention est également atteint par la fourniture d'une chaussure de sport comportant une coque rigide obtenue au moins partiellement par moulage d'une deuxième matière thermoplastique, ladite coque comprenant un insert qui comprend une première couche constituée d'un film fait d'une première matière thermoplastique, une deuxième couche faite d'une couche de décoration et d'une troisième couche faite d'un film de colle. L'insert est placé au contact de la deuxième matière thermoplastique à l'extérieur de la coque ou à l'intérieur de celle-ci et le film de colle est placé entre le film fait d'une première matière thermoplastique et la deuxième matière thermoplastique.

D'autres avantages de l'invention apparaîtront à la lecture de la description qui accompagne le dessin annexé et dans lequel :
La figure 1 est une vue de côté d'une chaussure de ski comportant une partie décorée et renforcée selon l'invention.
La figure 2 est une vue en perspective du collier de la chaussure de ski de la figure 1.
La figure 3 est une vue représentant le complexage de l'insert utilisé dans la méthode selon un premier mode de réalisation de l'invention.
La figure 4 est une vue en perspective partielle d'un moule servant à la fabrication du collier représenté à la figure 2.
La figure 5 est une vue de côté d'un bas de coque et d'un collier décorés selon l'invention.

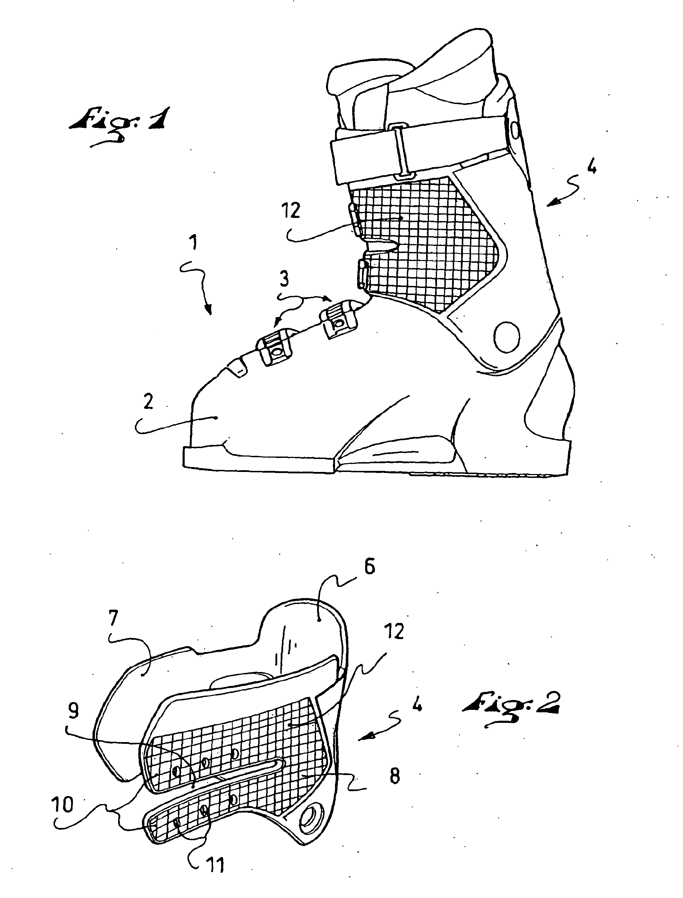

La figure 1 montre une chaussure alpine 1 décorée et renforcée selon l'invention. Il s'agit d'une vue de côté représentant la face interne ou médiale de la chaussure. Celle-ci est constituée par un bas de coque 2. Le bas de coque est équipé de deux dispositifs de serrage 3 que l'on aperçoit sur le sommet de celui-ci. Ils comprennent chacun une crémaillère fixée sur le côté interne du bas de coque et un crochet fixé sur le côté externe. Un collier 4 est fixé sur le bas de coque 2 et constitue avec ce dernier la coque d'une chaussure alpine à l'intérieur de laquelle vient s'insérer un chausson de confort 5. Le collier 4 comprend une partie basse qui reçoit les moyens de fixation dudit collier sur le bas de coque et une partie haute qui enveloppe le bas de jambe de l'utilisateur. Ladite partie haute comprend un dos 6 relativement rigide, un overlap externe 7 et un overlap interne 8. L'overlap externe 7 reçoit les mécanismes à levier des dispositifs de serrage 3 tandis que l'overlap interne 8 reçoit des crémaillères destinées à coopérer avec lesdits dispositifs à levier. Bien entendu, l'utilisation de système de serrage à crochet et crémaillère n'est pas limitative dans le cadre de l'invention. Les overlaps et notamment les extrémités de ceux-ci sont appelés à se chevaucher et pour faciliter leur flexion, ils ont une épaisseur moindre que le reste du collier 4. Le bas de coque ainsi que le collier sont réalisés par injection moulage d'une matière thermoplastique. Dans le cas présent il s'agit de PU-polyuréthanne-, bien que d'autres matières conviennent également.

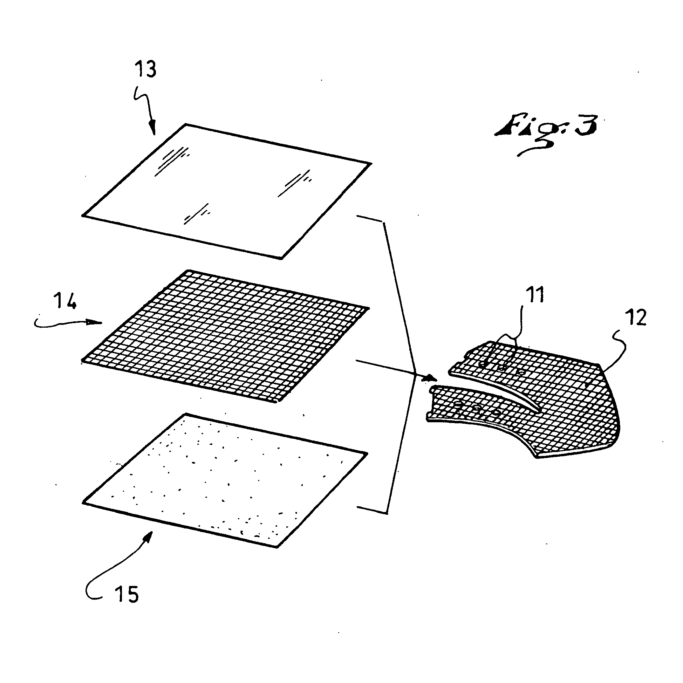

La figure 2 montre en perspective le collier 4 séparé du reste de la chaussure 1. L'overlap interne 8 est séparé en deux par une entaille horizontale 9. Deux languettes d'overlap 10 sont ainsi formées. Sur chacune de ces languettes 10 une crémaillère est fixée. Les trois trous 11 traversant chacune d'elles autorisent la fixation de la crémaillère en trois endroits distincts pour accroître l'amplitude du réglage possible. La séparation de l'extrémité libre de l'overlap interne 8 en deux languettes 10, assouplit ce dernier. D'autre part les dispositifs de serrage du collier acquièrent une plus grande autonomie. L'insert de décoration 12 est disposé dans l'overlap interne 8 et il couvre notamment les deux languettes d'overlap 10. L'insert de décoration 12 accroît la résistance à l'étirement des languettes 10 et empêche le fluage du PU même lorsque les languettes 10 sont soumises aux efforts générés par les dispositifs de serrage.

Dans des versions alternatives, non représentées, l'insert de décoration comprend une couche décorée sous la forme d'un film sur lequel un décor est imprimé ou encore une fine feuille métallique.

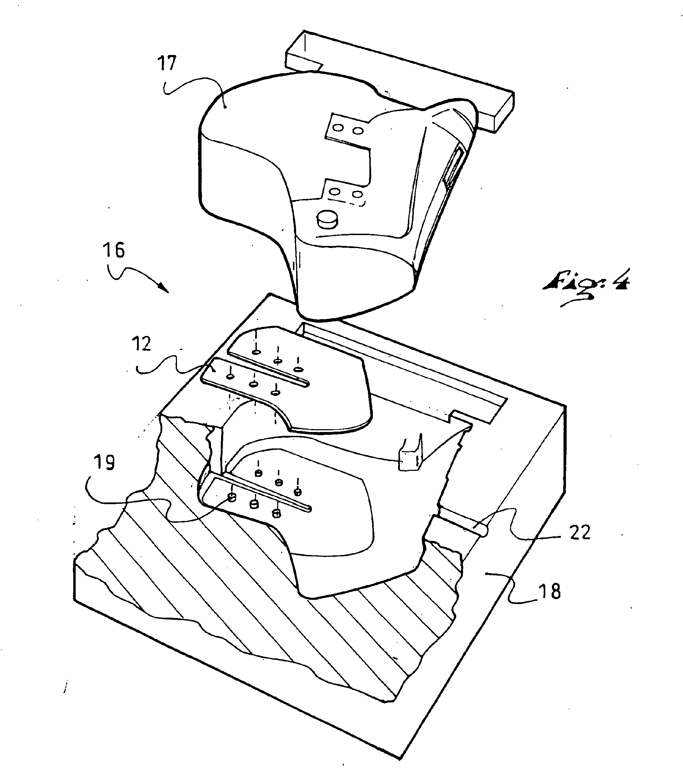

La figure 3 décrit la composition de l'insert de décoration 12 placé sur le collier de la chaussure de ski décrite aux figures précédentes. Il comprend une première couche 13 faite d'un film thermoplastique transparent, une deuxième couche 14 faite d'un assemblage de fibre formant une nappe textile et d'une troisième couche 15 faite d'un film de colle. La nappe textile est placée entre le film transparent et le film de colle. La trame textile de l'insert donne à l'overlap interne une plus grande résistance au fluage sans gêner la souplesse de celui-ci. Par conséquent, le collier assure un enveloppement confortable du bas de jambe tandis que le serrage peut être effectué efficacement. Tout ceci pouvant être avantageusement reproduit tout au long de la vie de la chaussure alpine car les propriétés de souplesse et de résistance à la traction du collier se maintiennent dans le temps.

Pour obtenir les meilleurs résultats quant à la résistance au fluage, il est préférable d'utiliser une couche textile tissée. D'autre part pour faciliter la cohésion des couches les unes avec les autres, on privilégiera l'utilisation d'un textile dont les mailles sont larges et ajourées. Le film transparent est fait d'une matière thermoplastique différente de celle qui est injectée pour la réalisation du bas de coque et du collier. Dans le cas présent on utilise un film PU d'une épaisseur de 0.6 mm. On utilisera de préférence un film thermoplastique dont l'épaisseur est supérieure à 0.2 mm. L'épaisseur maximale est fonction de l'épaisseur finale de la pièce à injecter. Ce film donne à l'insert suffisamment de rigidité pour en faciliter la mise en place et le maintien dans le moule. Bien entendu, d'autres matières sont également utilisables tel que du PVC.

Il est préférable pour la visibilité de la nappe textile que le film soit transparent étant bien entendu que des variantes peuvent être apportées sans, pour autant, sortir du cadre de l'invention. On peut par exemple remplacer le film transparent par un film plus ou moins translucide. L'effet esthétique donné par la présence de la nappe textile est alors tamisé car la nappe textile est peu visible. On peut également envisager d'utiliser un film opaque si on désire ne privilégier que la fonction "résistance au fluage". L'insert 12 est pré-assemblé avant d'être lui-même inséré dans le moule. La nappe textile de la deuxième couche 14 est prise entre le film transparent de la première couche 13 et le film de colle de la troisième couche. Après assemblage des trois couches, l'insert est découpé selon les dimensions désirées. Le découpage comprend la délimitation du contour extérieur ainsi qu'une pluralité d'ouvertures correspondantes, chacune a une position de fixation des crémaillères.

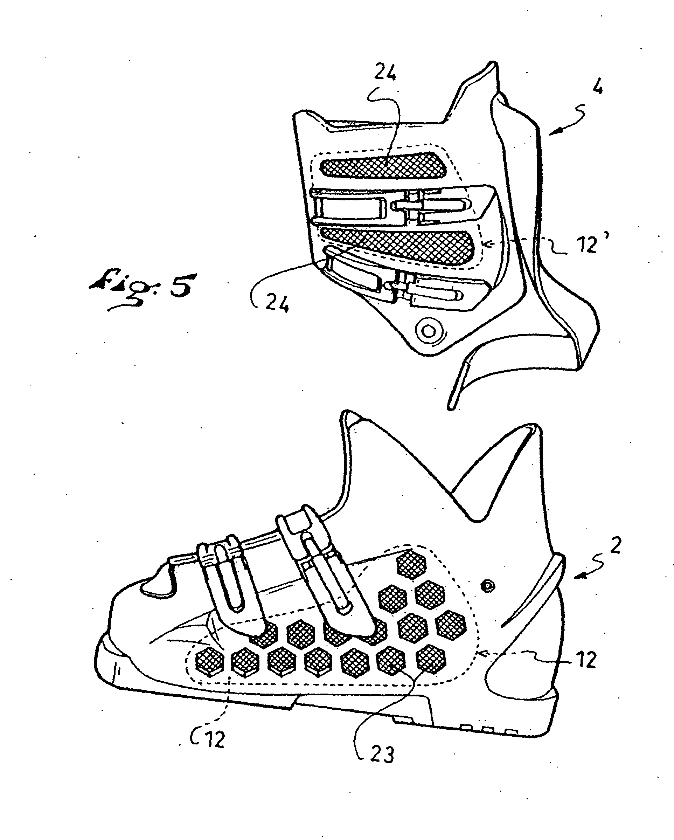

La figure 4 montre en perspective la mise en place de l'insert dans le moule d'injection 16 d'un collier de chaussure de ski. Le moule 16 comprend un noyau 17 et deux matrices. Pour des raisons de simplicité, seule la matrice interne 18 est représentée. Le fond de la matrice interne est équipé d'une pluralité de plots 19 faisant saillie de celui-ci. Ces plots 19 sont ajustés pour recevoir des ouvertures ménagées dans l'insert. Lorsque le moule 16 est ouvert, l'insert 12 est placé sur le fond de la matrice interne 18 et il est positionné par les plots 19. Le noyau 17 peut présenter des renfoncements 21 au regard des plots 19 de la matrice, ainsi que des ergots. En position fermée du moule, les ergots plaquent l'insert contre le fond de la matrice et les plots pénètrent, au moins partiellement dans les renfoncements. La matière en fusion est par la suite injectée par le canal de la buse 22. La première matière thermoplastique, celle constituant le film transparent de la première couche 13, a une température de plastification plus élevée que celle de la deuxième matière thermoplastique, la matière à injecter, et la température de chauffe du moule est choisie de telle façon que la première couche de l'insert ne change pas de phase lors de l'injection de la deuxième matière thermoplastique. Grâce au film de colle qui assure la cohésion des différentes couches constituant l'insert 12, la matière injectée ne viendra pas s'interposer entre le tissu et le film transparent. Ainsi, les qualités esthétiques de l'insert ne sont pas endommagées lors de l'injection.

La présence de la nappe textile de la deuxième couche 14 accroît la résistance mécanique de l'overlap interne 8 sans en augmenter le poids. Cette présence contribue plutôt à remplacer une partie de la deuxième matière thermoplastique, par exemple le PU que l'on injecte dans le moule, par un insert moins lourd que celle-ci. D'autre part, on choisira la nappe textile de telle façon que les fibres qui la compose ne soient pas sensibles aux variations de température susceptibles de se produire pendant l'utilisation de la chaussure de ski.

La figure 5 montre un deuxième mode de réalisation de l'invention. Elle représente le bas de coque 2, ainsi que le collier 4 d'une chaussure de ski alpin. Comme dans le premier mode de réalisation de l'invention, la coque extérieure de la chaussure de ski est constituée par moulage injection de deux parties principales que sont le bas de coque 2 et le collier 4. Sur cette figure, ces deux parties sont représentées désassemblées. Le chausson interne qui complète la chaussure n'est pas représenté.

Une pluralité d'évidements 23 sont ménagés sur la face externe du bas de coque 2. Ces évidements sont régulièrement disposés et définissent un "quadrillage". Dans le cas présent, chaque évidement 23 a un contour hexagonal et l'ensemble des évidements définit une structure de type nid d'abeille. Bien entendu la disposition ou la position des évidements n'est pas critique pour l'invention. Grâce à cette disposition, la chaussure est allégée et sa face externe est assouplie.

Lors de la fabrication du bas de coque, un insert est préparé qui comprend une première couche, une deuxième couche faite d'une nappe textile ainsi qu'une troisième couche faite d'un film de colle. L'insert de décoration 12 dont le contour est représenté en trait pointillé a une superficie telle qu'il peut couvrir l'ensemble des évidements 23. Dans ce mode de réalisation, le film de colle de la troisième couche est placé entre le film thermoplastique de la première couche et la nappe textile de la deuxième couche. L'insert 12 est préalablement à l'injection de la matière placé contre le noyau du moule. Conformément à l'invention, dans ce cas également, le film thermoplastique de la troisième couche est placé entre le film de colle et la paroi du noyau contre laquelle l'insert est plaqué. La pièce ainsi obtenue est non seulement décorée par la présence de parties textile visibles au travers des évidements 23, ainsi que protégée contre le fluage des portions de coque entourant les évidements 23 mais également étanchéifiée grâce à la présence de la première couche de l'insert réalisée dans une matière plastique étanche. L'insert 12 est dans ce cas placé à l'intérieur du bas de coque 2 au regard de la pluralité d'évidements 23, laissant ainsi visible le "quadrillage" des évidements 23.

Un mode de réalisation alternatif consisterait à placer l'insert, non pas sur le noyau mais contre la matrice du moule. Sur le produit fini, ceci aurait pour conséquence de masquer, au moins partiellement, la structure en alvéole de nid d'abeille de la pluralité d'évidements 23 car l'insert recouvre alors par l'extérieur l'ensemble des évidements.

Le collier 4 présente deux ouvertures 24 placées entre les deux crochets d'une part, et au-dessus du crochet supérieur d'autre part. Ces ouvertures 24 sont réalisées lors du moulage-injection. Un insert 12' est placé dans le moule avant injection de la matière et bouche chacune de ces ouvertures 24.

Pour la fabrication du bas de coque 2 comme du collier 4, l'insert qui est placé contre la surface du noyau est automatiquement plaqué et maintenu en place dès la fermeture du moule par la matrice externe. En effet, du fait de la réalisation des évidements 23 et des ouvertures 24, la matrice externe des moules du bas de coque comme de celui du collier entre en contact avec l'insert lors de la fermeture du moule.

L'invention ne se limite pas aux quelques modes de réalisation décrits à titre d'exemple et elle est transposable à la fabrication de n'importe quelle chaussure de sport, notamment de sport de glisse, qui comprend des pièces rigides obtenues par moulage de matière thermoplastique.

### NOMENCLATURE

- 1-: chaussure
- 2-: bas de coque
- 3-: dispositif de serrage
- 4-: collier
- 5-: chausson
- 6-: dos
- 7-: overlap externe
- 8-: overlap interne .
- 9-: entaille
- 10-: languette d'overlap
- 11-: trous
- 12, 12'-: insert
- 13-: première couche
- 14-: deuxième couche
- 15-: troisième couche
- 16-: moule
- 17-: noyau
- 18-: matrice interne
- 19-: plot
- 22-: canal
- 23-: évidements
- 24-: ouvertures

## Revendications

1. Procédé de fabrication d'un composant d'une chaussure de sport (1) comprenant les étapes suivantes :
- préparer un insert (12) par complexage de trois couches, une première couche (13) constituée d'un film fait d'une première matière thermoplastique, une deuxième couche (14) faite d'un assemblage de fibres et d'une troisième couche (15) faite d'un film de colle,
- ouvrir le moule (16), ledit moule comportant une matrice (18) et un noyau (17),
- placer dans ledit moule (16) et à proximité de l'une des parois du moule l'insert (12) de telle façon que le film thermoplastique soit placé entre le film de colle et ladite une des parois du moule,
- refermer ledit moule (16),
- injecter une deuxième matière thermoplastique dans ledit moule de façon que la matière thermoplastique recouvre au moins partiellement ledit insert (12),
- ouvrir à nouveau ledit moule et extraire la partie de la chaussure de sport ainsi fabriquée.

2. Procédé de fabrication selon la revendication 1, **caractérisé en ce que** ledit insert (12) est posé contre la paroi de la matrice (18). ..

3. Procédé de fabrication selon la revendication 1, **caractérisé en ce que** ledit insert (12) est posé contre la paroi du noyau (17).

4. Procédé de fabrication selon la revendication 1, **caractérisé en ce que** ladite première couche (13) est constituée d'une matière transparente.

5. Procédé de fabrication selon la revendication 1, **caractérisé en ce que** ladite première couche (13) a une épaisseur supérieure à 0,2 mm

6. Procédé de fabrication selon la revendication 1, **caractérisé en ce que** la matière recouvre entièrement ledit insert (12).

7. Procédé de fabrication selon la revendication 1, **caractérisé en ce que** sur une partie dudit insert (12), ladite matrice (18) et ledit noyau (17) sont au contact de l'insert.

8. Composant d'une chaussure de sport obtenu par le procédé de fabrication selon l'une des revendications 1 à 7.

9. Chaussure de sport comportant un composant obtenu par le procédé de fabrication selon l'une des revendications 1 à 7.

10. Chaussure de sport (1) selon la revendication 9 comportant une coque rigide obtenue au moins partiellement par moulage d'une deuxième matière thermoplastique, **caractérisée en ce que** la coque comprend un insert (12) placé au contact de ladite deuxième matière thermoplastique et qui comprend une première couche (13) constituée d'un film fait d'une première matière thermoplastique, une deuxième couche (14) faite d'un assemblage de fibres et d'une troisième couche (15) faite d'un film de colle.

11. Chaussure de sport (1) selon la revendication 10, **caractérisée en ce que** ladite coque est constituée d'un bas de coque (2) surmontée d'un collier (4), et **en ce que** ledit insert 12 est placé à l'extérieur de la face interne dudit collier.

12. Chaussure de sport (1) selon la revendication 10, **caractérisée en ce que** ladite coque comprend une pluralité d'évidements (23) ménagés sur la face externe et **en ce que** ledit insert (12) est placé à l'intérieur de la coque au regard de ladite pluralité d'évidements de façon à rendre étanche ladite coque.

## Claims

1. A method for the manufacture of a component of a sports boot (1) comprising the following steps:
- preparing an insert (12) as an assembly of three layers, a first layer (13) comprising a film made of a first thermoplastic material, a second layer (14) comprising an assembly of fibers, and a third layer (15) comprising an adhesive film,
- opening the mold (16), the mold comprising a matrix (18) and a core (17),
- placing the insert (12) into the mold (16), and adjacent a wall of the mold, with the first thermoplastic film being positioned between the adhesive film and the wall of the mold,
- closing the mold (16),
- injecting a second thermoplastic material in the mold, so that the thermoplastic material covers at least partially the insert (12),
- opening the mold again and removing the part of the sports boot thus manufactured.

2. A manufacturing method according to claim 1, **characterized in that** the insert (12) is positioned against the wall of the matrix (18).

3. A manufacturing method according to claim 1, **characterized in that** the insert (12) is positioned against the wall of the core (17).

4. A manufacturing method according to claim 1, **characterized in that** the first layer (13) comprises a transparent material.

5. A manufacturing method according to claim 1, **characterized in that** the first layer (13) has a thickness greater than 0.2 mm.

6. Manufacturing method according to claim 1, **characterized in that** the

7. Manufacturing method according to claim 1, **characterized in that** on a portion of the insert (12), the matrix (18) and the core (17) are in contact with the insert.

8. A component of a sports boot achieved by the manufacturing method according to one of claims 1 to 7.

9. A sports boot comprising a component achieved by the manufacturing method according to one of claims 1 to 7.

10. A sports boot (1) according to claim 9, comprising a rigid shell achieved at least partially by molding a second thermoplastic material, **characterized in that** the shell comprises an insert (12) positioned in contact with the second thermoplastic material and which comprises a first layer (13) comprising a film made of a first thermoplastic material, a second layer (14) comprising a fibers assembly, and a third layer (15) comprising an adhesive film.

11. A sports boot (1) according to claim 10, **characterized in that** the shell comprises a shell base (2) surmounted by a collar (4), and **in that** the insert (12) is positioned on an outer face of the inner face of the collar.

12. A sports boot (1) according to claim 10, **characterized in that** the shell comprises a plurality of cavities (23) arranged on the outer face and **in that** the insert (12) is positioned inside the shell opposite the plurality of cavities so as to seal the shell.

## Patentansprüche

1. Verfahren zur Herstellung einer Komponente eines Sportschuhs (1), aufweisend die nachfolgenden Schritte:
- Vorbereiten eines Einsatzes (12) durch Komplexierung von drei Schichten, einer ersten Schicht (13), welche aus einer Folie gebildet wird, die aus einem ersten thermoplastischen Material hergestellt ist, einer zweiten Schicht (14), welche aus einer Verbindung von Fasern hergestellt ist, und einer dritten Schicht (15), welche aus einer Klebstofffolie hergestellt ist,
- Öffnen der Form (16), wobei die Form eine Matrize (18) und einen Kern (17) aufweist,
- Setzen des Einsatzes (12) in die Form (16) und in die Nähe von der einen der Wände der Form, derart, dass die thermoplastische Folie zwischen die Klebstofffolie und die eine der Wände der Form gesetzt ist,
- Wiederverschließen der Form (16),
- Einspritzen eines zweiten thermoplastischen Materials in die Form, derart, dass das thermoplastische Material zumindest teilweise den Einsatz (12) bedeckt,
- erneutes Öffnen der Form und Herausbringen des so hergestellten Teils des Sportschuhs.

2. Herstellungsverfahren nach Anspruch 1, **dadurch gekennzeichnet, dass** der Einsatz (12) gegen die Wand der Matrize (18) gesetzt wird.

3. Herstellungsverfahren nach Anspruch 1, **dadurch gekennzeichnet, dass** der Einsatz (12) gegen die Wand des Kerns (17) gesetzt wird.

4. Herstellungsverfahren nach Anspruch 1, **dadurch gekennzeichnet, dass** die erste Schicht (13) aus einem transparenten Material gebildet wird.

5. Herstellungsverfahren nach Anspruch 1, **dadurch gekennzeichnet, dass** die erste Schicht (13) eine größere Dicke als 0,2 mm aufweist.

6. Herstellungsverfahren nach Anspruch 1, **dadurch gekennzeichnet, dass** das Material den Einsatz (12) vollständig bedeckt.

7. Herstellungsverfahren nach Anspruch 1, **dadurch gekennzeichnet, dass** auf einem Teil des Einsatzes (12) die Matrize (18) und der Kern (17) in Kontakt mit dem Einsatz sind.

8. Komponente eines Sportschuhs, welche durch das Herstellungsverfahren gemäß einem der Ansprüche 1 bis 7 erhalten ist.

9. Sportschuh, aufweisend eine Komponente, welche durch das Herstellungsverfahren nach einem der Ansprüche 1 bis 7 erhalten ist.

10. Sportschuh (1) nach Anspruch 9, aufweisend eine steife Schale, welche zumindest teilweise durch Gießformen eines zweiten thermoplastischen Materials erhalten wird, **dadurch gekennzeichnet, dass** die Schale einen Einsatz (12) aufweist, welcher in Kontakt mit dem zweiten thermoplastischen Material gesetzt ist und welcher eine erste Schicht (13) aufweist, die aus einer Folie gebildet wird, welche aus einem ersten thermoplastischen Material hergestellt ist, eine zweite Schicht (14), welche aus einer Verbindung von Fasern hergestellt ist, und eine dritte Schicht (15), welche aus einer Klebstofffolie hergestellt ist.

11. Sportschuh (1) nach Anspruch 10, **dadurch gekennzeichnet, dass** die Schale aus einem Schalenunterteil (2) gebildet wird, über welchem ein Kragen (4) montiert ist, und dass der Einsatz (12) an die Außenseite der inneren Fläche des Kragens gesetzt ist.

12. Sportschuh (1) nach Anspruch 10, **dadurch gekennzeichnet, dass** die Schale eine Mehrzahl von Aussparungen (23) aufweist, welche an der äußeren Fläche vorgesehen sind, und dass der Einsatz (12) ins Innere der Schale gegenüber der Mehrzahl von Aussparungen derart gesetzt ist, um die Schale dicht zu machen.
